# EUROPÄISCHE PATENTANMELDUNG

(11) **EP 1 061 688 A2**
(43) Veröffentlichungstag der Anmeldung: **20.12.2000**
(21) Anmeldenummer: 00112450.2
(22) Anmeldetag: 10.06.2000
(51) Int. Cl.: H04L 1/18, H04L 1/16

(54) **Verfahren zur wiederholten Übertragung von Nachrichten in einem zentral gesteuerten Kommunikationsnetz**

(30) Priorität: 17.06.1999 DE 19927639
(71) Anmelder: ROBERT BOSCH GMBH, 70442 Stuttgart (DE)
(72) Erfinder: Vollmer, Vasco, 29471 Gartow (DE); Radimirsch, Markus, 30880 Laatzen (DE)

(57) **Zusammenfassung**

Zur wiederholten Übertragung von Nachrichten in einem zentral gesteuerten Kommunikationsnetz werden Nachrichten, die von mehreren Terminals (T1, T2 ...) empfangen werden sollen, nur einmal von der Zentrale (ZE) ausgesendet. Sobald ein Terminal (T1, T2 ...) den Verlust einer Nachricht festgestellt hat, sendet es eine Wiederholungsanforderung (NACK, ACK) für diese Nachricht und zwar über eine andere Kommunikationsverbindung, insbesondere eine Punkt- zu-Punkt Verbindung. Die Zentrale (ZE) wiederholt daraufhin diese Nachricht innerhalb eines vorgegebenen Zeitfensters.

## Beschreibung

### Stand der Technik

Die Erfindung geht aus von einem Verfahren zur wiederholten Übertragung von Nachrichten in einem zentral gesteuerten Kommunikationsnetz.

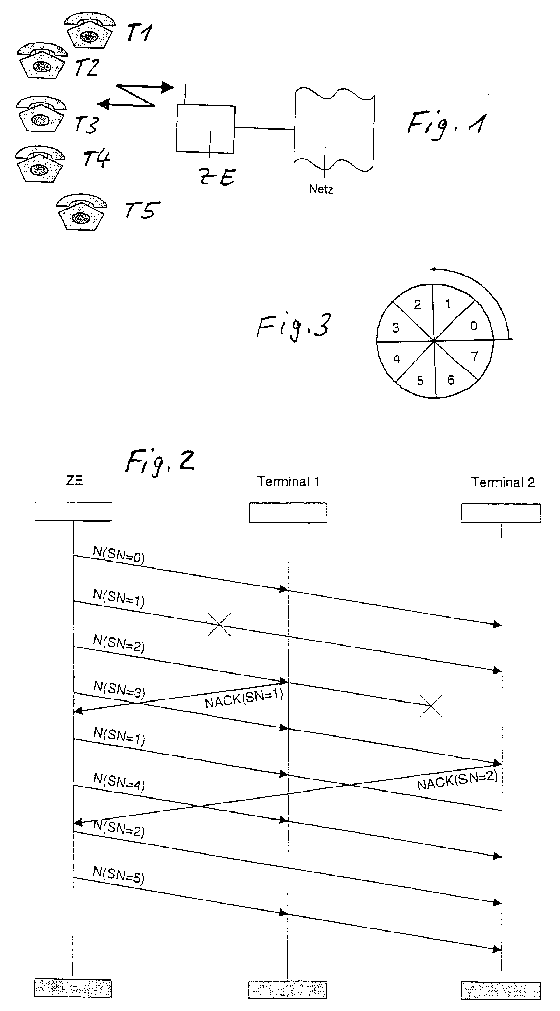

In zentral gesteuerten insbesonderen zellularen Funknetzen ist, wie Figur 1 zeigt, eine Zentrale ZE vorgesehen, an die mehrere Terminals T1, T2 ... angeschlossen werden können. Diese Terminals können beispielsweise Telefone, aber auch PCs oder andere Geräte sein. Ein solches System arbeitet beispielsweise verbindungsorientiert, d.h. bevor Daten mit anderen Terminals, die an das Netz oder die Zentrale ZE angeschlossen sind, ausgetauscht werden können, muß mindestens eine Verbindung aufgebaut werden.

Neben diesen Verbindungen bei denen jeweils nur ein Terminal bedient wird, gibt es auch Verbindungen, bei denen mehrere oder alle Terminals gleichzeitig bedient werden. (Multicast, Broadcast). Bei den bestehenden Systemen wird dabei auf eine vollständige Fehlerkorrektur verzichtet. Insbesondere bei der Funkübertragung muß jedoch mit hohen Fehlerwahrscheinlichkeiten gerechnet werden. Um dennoch die Übertragung fehlersensitiv für Daten zu ermöglichen, wurden diverse Verfahren entwickelt. In den meisten Fällen wird heute eine Kombination aus Fehlerschutzcodierung (Forward Error Correction, FEC) und automatischer Wiederholungsanforderung (Automatic Repeat Request, ARQ) verwendet. Die FEC beruht darauf, im Sender gezielt Redundanz hinzuzufügen, so daß im Empfänger die Nachricht auch dann noch korrigiert und fehlerfrei empfangen werden kann, wenn diese einige Übertragungsfehler enthält. ARQ dagegen beruht darauf, daß der Empfänger feststellen kann, wenn eine Nachricht fehlerhaft übertragen wurde. Dies wird im allgemeinen durch eine zusätzliche Prüfsumme erreicht. Wenn der Empfänger einen Fehler erkennt, fordert er dieses Datenpaket beim Sender erneut an. Für dieses Verfahren ist demnach eine bidirektionale Übertragung zwingend erforderlich. ARQ wurde bereits detailliert untersucht und in vielen Varianten für die unterschiedlichen Einsatzgebiete (hohe und geringe Fehlerwahrscheinlichkeit optimiert) [1] bis [4]. Alle diese Verfahren gehen jedoch von einer bidirektionalen Verbindung, d.h. im allgemeinen von einer Punkt-zu-Punkt Verbindung aus.

### Vorteile der Erfindung

Mit den im Anspruch 1 sowie den Unteransprüchen aufgezeigten Schritten ist es möglich, auch bei Broadcast- und Multicast-Verbindungen, d.h. Betriebsweisen, bei denen Terminals von einer Zentrale gleichzeitig bedient werden, Wiederholungsanforderungen zu übertragen. Dazu werden Nachrichten, die von mehreren Terminals einer Teilnehmergruppe empfangen werden sollen, nur einmal ausgesendet, jedoch von allen beteiligten Terminals empfangen und verarbeitet. Dieser Multicast-Betrieb (Gruppe aus mehreren ausgewählten Terminals in einer Funkzelle) oder auch Broadcast-Betrieb (alle in einer Zelle befindlichen Terminals) geschieht bei bisherigen Kommunikationssystemen nur in einer Richtung, nämlich von der Zentrale zu den Terminals (Downlink). Erfindungsgemäß nutzt das erfindungsgemäße Verfahren eine andere Kommunikationsverbindung, vorteilhafterweise eine bestehende Punkt-zu-Punkt Verbindung zwischen einem Terminal der Multicast-Gruppe bzw. Broadcast-Teilnehmern und der Zentrale, um ein einfaches Protokoll zur Wiederholungsanforderung durchführen zu können, indem eine Wiederholung einer fehlerhaften oder verlorengegangenen Nachricht innerhalb eines vorgegebenen Zeitfensters angefordert wird. Dadurch wird die Wahrscheinlichkeit für die Übertragung eines fehlerhaften Datenpaketes deutlich reduziert, ohne daß aufwendige Fehlerschutzmaßnahmen erforderlich sind. Da eine Punkt-zu-Punkt Übertragung zum Austausch von Kontrollinformationen zwischen den Terminals und der Zentrale insbesondere im Kommunikationssystem HIPERLAN Typ 2 sowieso vorgesehen ist, entsteht kein Mehraufwand für die Übertragung von Wiederholungsanforderungen.

Wiederholungsanforderungen sind insbesondere bei Funknetzen von großer Bedeutung, da hier aufgrund der physikalisch bedingten hohen Fehlerrate die fehlerfreie Übertragung von Daten mit herkömmlichen Verfahren (FEC) nicht sichergestellt werden kann. Bei den derzeit üblichen Diensten wie Sprachübertragung oder Bildübertragung, vgl. GSM, DVB-T, fällt dieses nicht ins Gewicht, da diese in einem gewissen Rahmen fehlertolerant sind. Bei der Sprachübertragung macht sich ein Übertragungsfehler im allgemeinen nur durch ein kurzes Störgeräusch bemerkbar. Sollen über ein Funknetz jedoch elektronische Daten, wie Softwareprogramme oder Dokumente übertragen werden, dürfen keinerlei Fehler auftreten, da diese in den meisten Fällen dazu führen, daß die gesamte Daten unleserlich werden.

### Zeichnungen

Figur 2 zeigt den Ablauf der wiederholten Übertragung fehlerhafter Nachrichten und
Figur 3 die Steuerung des Zeitfensters.

### Beschreibung von Ausführungsbeispielen

Für die Durchführung des erfindungsgemäßen Verfahrens wird von dem in Zusammenhang mit Figur 1 erläuterten zentralgesteuerten Kommunikationsnetz ausgegangen, beispielsweise einem HIPERLAN Typ 2 Kommunikationssystem. Das Verfahren der Erfindung kann natürlich auch für Verfahren mit anderer Signalisierung angewendet werden.

Im HIPERLAN Typ 2 Kommunikationssystem wird einem Terminal T1, T2 ... eine temporäre Adresse zugewiesen, solange es mit der Zentrale ZE in Verbindung steht, d.h. als Netzteilnehmer angemeldet ist. Die temporäre Adresse (MAC-ID) wird während der Kommunikation verwendet, um ein Terminal innerhalb einer Zelle eindeutig zu adressieren. Für Broadcast- und Multicast-Übertragungen ist/sind eine oder mehrere vordefinierte Adresse/n vorgesehen. Die Zentrale ZE sendet Broadcast- und Multicast-Nachrichten mit dieser vordefinierten Adresse als Ziel aus. Alle Terminals in einer Zelle, bzw. alle, die zu dieser Multicast-Gruppe gehören, empfangen diese Nachricht. Wie bei Punkt-zu-Punkt Verbindungen enthalten die Nachrichten ein Identifikationsmerkmal, z.B. eine laufende Nummer (Sequenznummer SN), anhand derer ein Terminal erkennen kann, ob eine Nachricht bei der Übertragung oder Dekodierung verlorengegangen ist. Sobald ein Terminal den Verlust einer Nachricht oder eine fehlerhafte Nachricht mit den zuvor beschriebenen Mechanismen feststellt, sendet es eine Wiederholungsanforderung, beispielsweise eine negative Quittung (negative acknowledge NACK), die die Sequenznummer der verlorengegangenen Nachricht enthält. Diese Wiederholungsanforderung NACK wird dabei auf einer der bestehenden Punkt-zu-Punkt Verbindungen zwischen einem jeweiligen Terminal und der Zentrale ZE übertragen. Zumindest eine dieser Verbindungen besteht immer, um Kontrollinformationen auszutauschen. Die Zentrale ZE wiederholt daraufhin die Nachricht mit der alten Sequenznummer SN. Dadurch kann es vorkommen, daß ein Terminal die gleiche Nachricht mehrmals erhält. Deshalb ist es vorteilhaft, daß ein anderes Terminal, das zur Broadcast-Zone oder einer Multicast Gruppe gehört und eine eingehende Nachricht mit einer Sequenznummer, die es bereits vorher korrekt empfangen hat, löscht. Bisher wurde davon ausgegangen, daß nur fehlerhafte oder verloren gegangene Nachrichtenpakete quittiert werden, d.h. in einer Wiederholungsanforderung wird deren Sequenznummer als negative Quittung NACK untergebracht. Alternativ hierzu können auch die korrekt empfangenen Nachrichtenpakete quittiert werden - positive Quittung ACK. Anstatt mit einer Quittung ACK oder NACK nur eine Sequenznummer zu bestätigen, können auch mehrere aufgeführt werden, oder mit einer Sequenznummer alle vorhergehenden seit der letzten Quittung positiv oder negativ quittiert werden.

Um zu verhindern, daß ein Terminal mit sehr schlechten Kanaleigenschaften und dadurch bedingten häufigen Wiederholungen die gesamte Übertragung stoppen kann, wird ein vorgegebenes Zeitfenster, insbesondere ein sogenanntes ARQ (Automatic Repeat Request) -Fenster, verwendet. Dieses ARQ-Fenster wird so gesteuert, daß eine Nachricht nur innerhalb einer bestimmten Zeit wiederholt werden kann. Die zeitliche Granularität für dieses Zeitfenster ist die Länge einer Nachricht. Für die Steuerung dieses Zeitfensters wird ein Zähler vorgesehen, der mit der Sequenznummer SN inkrementiert. Es wird insbesondere hierzu ein modulo N Zähler verwendet, d.h. nach Erreichen des Maximalwertes (N-1) springt er auf eine Ausgangsposition 0 zurück und beginnt erneut zu inkrementieren. N gibt die Anzahl der aufeinanderfolgenden Nachrichten an. Die Fenstergröße ergibt sich dabei dann durch die Länge einer Nachricht multipliziert mit dem Wert N-1. Eine Wiederholungsanforderung ist demnach nur innerhalb von SN+(N-1) ausgesendeten Nachrichten möglich. Dabei sollte die Anzahl der möglichen Sequenznummern mindestens die doppelte Anzahl der Größe des ARQ-Fensters haben, um eine eindeutige Zuordnung zu erhalten. Es ist vorteilhaft, die Anzahl der maximal möglichen Wiederholungsanforderungen einer bestimmten Nachricht durch ein einzelnes Terminal zu begrenzen, um hier ein Aufhalten des Übertragungsvorganges durch eine schnelle Folge von Wiederholungsanforderungen eines Terminals auszuschließen.

Bei dem in den Figuren 2 und 3 dargestellten Ausführungsbeispiel wird von einem modulo 8 Fenster ausgegangen, d.h. in der Zentrale ZE werden nur die vorhergehenden sieben Nachrichten gespeichert und dementsprechend ist auch eine Wiederholung nur dieser zurückliegenden sieben Nachrichten möglich. Figur 2 zeigt ein Nachrichtenflußdiagramm hierzu. Dabei sind eine Zentrale ZE und zwei Terminals 1 und 2 dargestellt. Die von diesen Blöcken ausgehenden senkrechten Linien stellen in Abwärtsrichtung die Zeitachse dar, so daß sich ein zeitlicher Ablauf ergibt. Dabei sendet die Zentrale ZE Nachrichten aus, diese beinhalten die Sequenznummer SN. Der Empfang einer solchen Nachricht wird durch einen Pfeil an der Zeitachse eines Terminals gezeigt. Die fehlerhafte Übertragung einer Nachricht wird. durch ein X dargestellt. Sobald ein Terminal eine Nachricht mit einer Sequenznummer größer als der erwarteten empfängt, sendet es eine Wiederholungsanforderung, d.h. eine negative Quittung NACK mit der erwarteten Sequenznummer SN aus. In der Figur 2 ist Nachricht 1 von Terminal 1 nicht oder fehlerhaft empfangen worden. Dieser Fehler wird durch den Empfang von Nachricht 2 durch die fehlende Sequenznummer erkannt und die Wiederholungsanforderung NACK zurückgesendet. Nach dem Eingang der Wiederholungsanforderung NACK in der Zentrale ZE sendet diese die entsprechende Nachricht N (SN=1) erneut (nach N (SN=3)) . Terminal 1 empfängt jetzt diese Nachricht und setzt sein ARQ-Fenster entsprechend weiter. Terminal 2 hat diese Nachricht bereits beim erstenmal fehlerfrei empfangen und verwirft die erneute Übertragung, was durch die fehlende Pfeilspitze angedeutet ist. Nachricht 2 (SN=2) wurde dagegen von Terminal 2 fehlerhaft empfangen und dementsprechend neu angefordert und auch übertragen.

Für die Wiederholung von Nachrichten innerhalb des ARQ-Fensters wird ein Speicher verwendet, der so gesteuert wird, daß eine neu auszusendende Nachricht jeweils die älteste noch gespeicherte Nachricht überschreibt. Figur 3 zeigt den prinzipiellen Ablauf hierzu. Es ist ein modulo 8 Puffer vorgesehen, wobei jedes Segment des in Figur 3 dargestellten Kreises einen Pufferplatz bezeichnet. Eine neue Nachricht überschreibt dabei jeweils eine Nachricht, die um acht Schritte älter ist, d.h. um eine um acht Schritte niedrigere Sequenznummer besitzt.

### Literatur:

[1] A.S. Tanenbaum, "Computernetzwerke", Prentice Hall, München, 1998, Seiten 227 bis 244,
[2] B. Walke,"Mobilfunknetze und ihre Protokolle", B.G. Teubner, Stuttgart, 1998, Seiten 91 bis 99,
[3] D. Petras, "Entwicklung und Leistungsbewertung einer ATM-Funkschnittstelle", Dissertation an der RWTH Aachen, 1998, Kapitel 8.3, Seiten 81 bis 85,
[4] D.Bertsekas, R. Gallager, "Data Networks", Prentice-Hall, Englewood Cliffs, New Jersey, 1992, Seiten 64 bis 68

## Patentansprüche

1. Verfahren zur wiederholten Übertragung von Nachrichten in einem zentral gesteuerten Kommunikationsnetz insbesondere Funknetz, bei dem mehrere Terminals (T1, T2 ...) gleichzeitig bedienbar sind, mit folgenden Schritten:
- Nachrichten, die von mehreren Terminals (T1, T2 ...) einer Teilnehmergruppe empfangen werden sollen, werden nur einmal von der Zentrale (ZE) ausgesendet, wobei den Nachrichten jeweils ein Identifikationsmerkmal (SN) zugeordnet wird zur Erkennung, ob eine Nachricht fehlerhaft war oder verloren ging,
- sobald ein Terminal (T1, T2 ...) einen Fehler oder den Verlust einer Nachricht festgestellt hat, sendet es eine Wiederholungsanforderung (NACK,ACK) für diese Nachricht über eine andere Kommunikationsverbindung, insbesondere eine Punkt-zu-Punkt Verbindung zwischen der Zentrale (ZE) und dem betroffenen Terminal (T1, T2 ...),
- die Zentrale (ZE) wiederholt daraufhin diese Nachricht innerhalb eines vorgegebenen Zeitfensters.

2. Verfahren nach Anspruch 1, dadurch gekennzeichnet, daß Terminals (T1, T2 ...) zum Multicast (Gruppe aus mehreren ausgewählten Teilnehmern in einer Funkzelle) ; oder Broadcast (alle in einer Zelle befindlichen Teilnehmer) -Betrieb zusammengefaßt werden.

3. Verfahren nach Anspruch 1 oder 2, dadurch gekennzeichnet, daß einem Terminal(T1, T2 ...) eine temporäre Adresse (MAC-ID) zugewiesen wird, solange es als Netzteilnehmer mit der Zentrale (ZE) in Verbindung steht.

4. Verfahren nach einem der Ansprüche 2 oder 3, dadurch gekennzeichnet, daß für den Broadcast- und/oder Multicast-Betrieb den Terminals (T1, T2 ...) mindestens eine vordefinierte Adresse zugeordnet wird.

5. Verfahren nach einem der Ansprüche 1 bis 4 , dadurch gekennzeichnet, daß den einzelnen Nachrichten Sequenznummern (SN) als Identifikationsmerkmal zugeordnet werden, daß in einer Wiederholungsanforderung (NACK, ACK) jene Sequenznummer/n (SN) untergebracht wird/werden, die einer verlorengegangenen oder fehlerhaften Nachricht entspricht/entsprechen, und daß die Zentrale (ZE) die Nachricht mit dieser/diesen Sequenznummer/n (SN) in der Wiederholungsanforderung (NACK, ACK) wiederholt.

6. Verfahren nach Anspruch 5, dadurch gekennzeichnet, daß ein Terminal (T1, T2 ...) , das eine Nachricht mit einer bereits zuvor empfangenen Sequenznummer (SN) erhält, löscht oder nicht auswertet.

7. Verfahren nach einem der Ansprüche 1 bis 6, dadurch gekennzeichnet, daß von der Zentrale (ZE) nur eine vorgegebene Anzahl von zurückliegenden ausgesendeten Nachrichten für eine Wiederholung gespeichert wird.

8. Verfahren nach einem der Anspräche 1 bis 7, dadurch gekennzeichnet, daß das Zeitfenster in Abhängigkeit der Anzahl der Nachrichten bemessen wird und insbesondere mindestens so groß gewählt wird wie die doppelte Anzahl der verwendeten Sequenznummern(SN).

9. Verfahren nach einem der Ansprüche 1 bis 8, dadurch gekennzeichnet, daß die Anzahl der maximal möglichen Wiederholungsanforderungen einer vorgegebenen Nachricht durch ein einzelnes Terminal (T1, T2 ...) begrenzt wird.

10. Verfahren nach einem der Ansprüche 1 bis 9, dadurch gekennzeichnet, daß die jeweilige Lage des Zeitfensters in Abhängigkeit einer vorgegebenen Anzahl von Nachrichten gesteuert wird und bei Erreichen des Maximalwertes dieser vorgegebenen Anzahl von Nachrichten wieder in eine Ausgangsposition zurückgesetzt wird.

11. Verfahren nach einem der Ansprüche 1 bis 7, dadurch gekennzeichnet, daß zur Wiederholung von Nachrichten ein Speicher verwendet wird, der so gesteuert wird, daß eine neu auszusendende Nachricht jeweils die älteste noch gespeicherte Nachricht überschreibt.

12. Verfahren nach einem der Ansprüche 1 bis 11, dadurch gekennzeichnet, daß zur Benachrichtigung der Zentrale (ZE), ob eine Wiederholung fehlerhafter oder verloren gegangener Nachrichten notwendig ist, entweder alle korrekt empfangenen Nachrichten quittiert werden (ACK) oder nur die fehlerhaft bzw. nicht empfangenen Nachrichten (NACK).

13. Verfahren nach einem der Ansprüche 1 bis 12, dadurch gekennnzeichnet, daß zur Benachrichtigung der Zentrale (ZE), ob eine Wiederholung fehlerhafter oder verloren gegangener Nachrichten notwendig ist, entweder nur ein oder mehrere Identifikationsmerkmale/Sequenznummern quittiert werden.

14. Verfahren nach einem der Ansprüche 13, dadurch gekennzeichnet, daß zur Benachrichtigung der Zentrale (ZE), ob eine Wiederholung fehlerhafter oder verloren gegangener Nachrichten notwendig ist, mit nur einem rückgesendeten Identifikationsmerkmal bzw. Sequenznummer alle vorhergehenden Nachrichten seit der letzten Quittierung positiv oder negativ quittiert werden.
